# EUROPEAN PATENT APPLICATION

(11) **EP 4 625 286 A1**
(43) Date of publication of application: **01.10.2025**
(21) Application number: 24167781.4
(22) Date of filing: 28.03.2024
(51) Int. Cl.: G06Q 10/087, B65G 1/04

(54) **SYSTEM AND METHOD FOR VERIFYING A LOGICAL REPRESENTATION**

(71) Applicant: AUTOSTORE TECHNOLOGY AS, 5578 Nedre Vats (NO)
(72) Inventor: Tashoma, Abiyu, 5578 Nedre Vats (NO)
(74) Representative: Gillott-Jones, Nathan Philip

(57) **Abstract**

The disclosure relates to a method for verifying a logical representation of a storage grid for an automated storage and retrieval system, wherein the storage grid is installed in a physical environment, the method comprising receiving data associated with a position of one or more features within the physical environment, wherein the data is captured using at least one sensor associated with a remotely operated vehicle in a known position relative to the storage grid; comparing the received data to the logical representation; and verifying the logical representation based on a result of the comparing; wherein the verified logical representation is for controlling movement of one or more robotic container-handling vehicles relative to the storage grid.

## Description

### TECHNICAL FIELD

The disclosure relates to a system and method for verifying a logical representation. More particularly, it relates to a method for verifying a logical representation of a storage grid for an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

An automated storage and retrieval system is typically installed in a warehouse. During a design phase of a given installation of an automated storage and retrieval system, a plan of the automated storage and retrieval system may be developed. This plan is a logical representation of the grid of the automated storage and retrieval system, and other intended features of the automated storage and retrieval system.

However, for various reasons, the constructed automated storage and retrieval system may deviate from the planned layout. For example, a column or support of the warehouse building may be located within a different column of the grid to the column indicated in the plan. As a further example, a charger for charging a container-handling vehicle may be positioned in a different location to that indicated in the plan (e.g., if the constructed grid includes more rows or columns than the grid indicated in the plan). Deviations from the plan may occur as a result of building construction issues that necessitate layout changes, or human error during construction. Evaluating deviations of the constructed grid from the plan is particularly challenging for large sites, where it is difficult to evaluate such deviations manually.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a flow chart of a method of verifying a logical representation of a storage grid;
Fig. 6 shows a shows a top down view of a remotely operated vehicle and a logical representation of the grid;
Fig. 7 shows a representation of a remotely operated vehicle on a constructed grid;
Fig. 8a shows a result of processing data captured by the remotely operated vehicle on the grid;
Fig. 8b shows an update to a logical representation of the grid;
Fig. 9 shows a schematic diagram of a remotely operated vehicle that may be used for collecting data.

### DETAILED DESCRIPTION

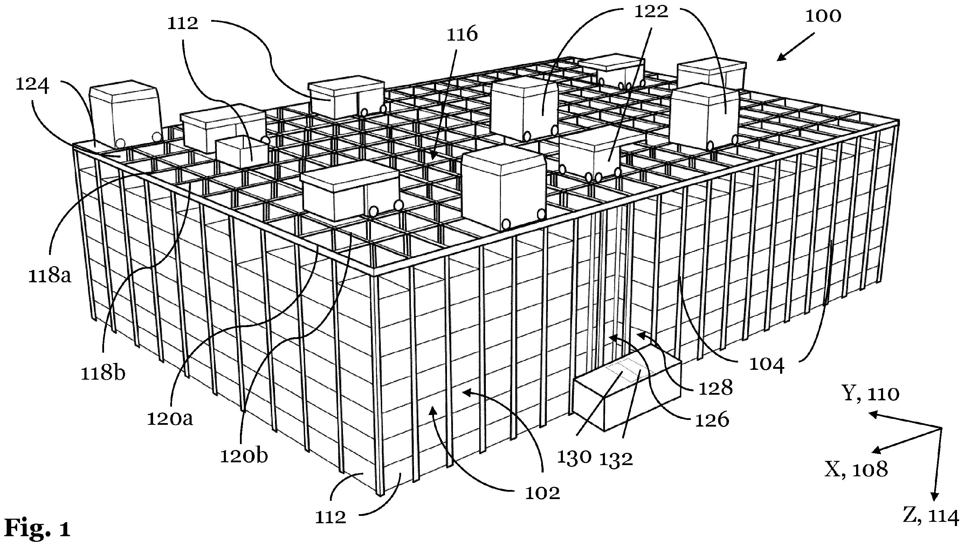

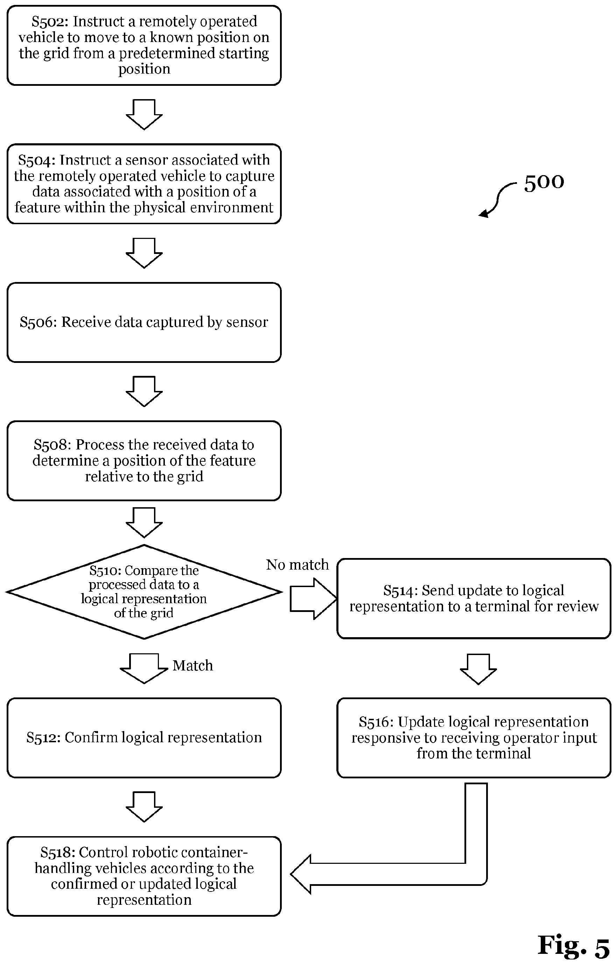

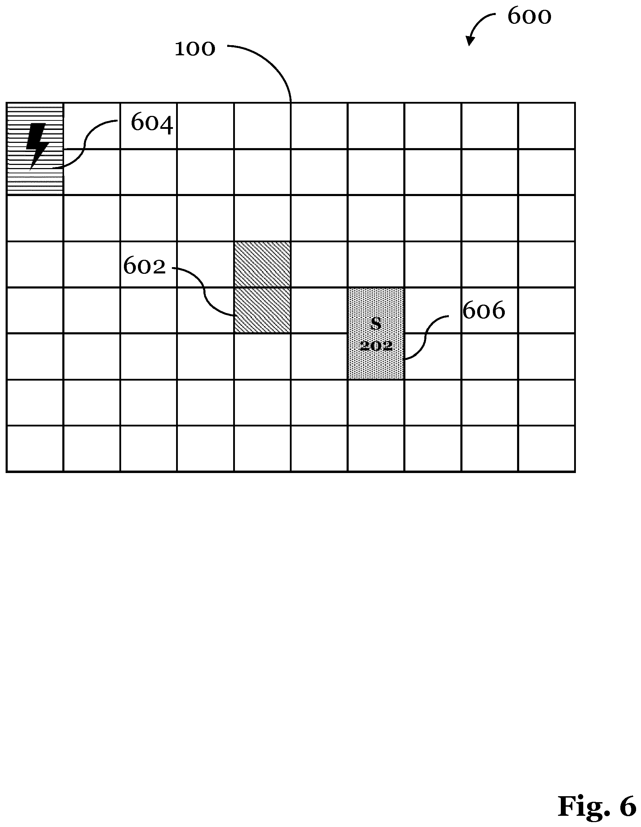

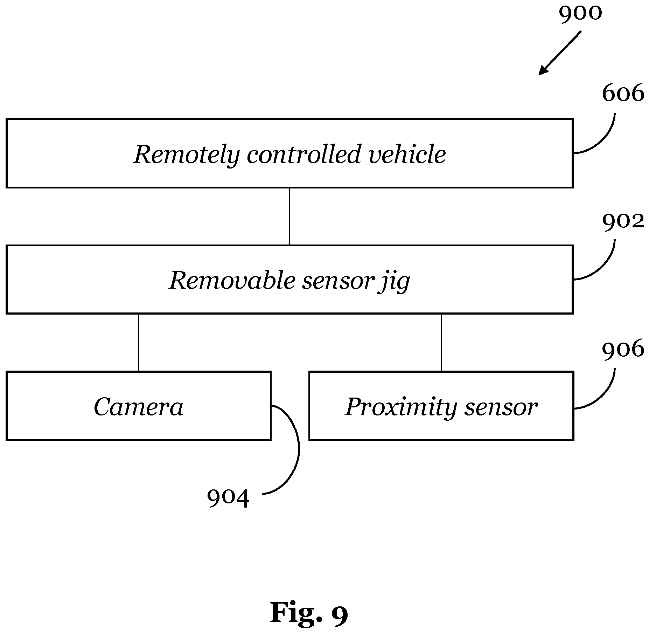

In overview, the disclosure relates to a method (e.g. the method 500 shown in Fig. 5) for verifying a logical representation of a storage grid for an automated storage and retrieval system (e.g., the storage grid 100 shown in Fig. 1). The storage grid is installed in a physical environment such as barn or warehouse. The method includes receiving data associated with a position of one or more features within the physical environment, which may include features other than the storage grid (i.e., features other than the rail system 116 and vertical columns 102 of the grid 100 shown in Fig. 1). Such features may include features of the physical environment in which the storage grid is installed, or features of the automated storage and retrieval system that interface with the storage grid. The data is captured using at least one sensor associated with a remotely operated vehicle (e.g., the remotely operated vehicle 606 shown in Figs. 6 and 9) in a known position relative to the storage grid. After receiving the data, the method includes comparing the received data to the logical representation. Then, the method includes verifying the logical representation based on a result of the comparing. The verified logical representation is used for controlling movement of one or more robotic container-handling vehicles relative to the storage grid (e.g., the movement of one or more of the robots 202, 204 on the rail system 116 of the storage grid 100 shown in Fig. 1).

The method described above allows a logical representation of a storage grid to be verified using data captured using at least one sensor associated with a remotely operated vehicle. The described method therefore provides a verification process to establish whether the constructed storage grid deviates from the logical representation of the storage grid. Such verification is useful because the logical representation is used for controlling movement of robotic container-handling vehicles on and around the storage grid. Having an accurate logical representation for controlling the robotic container-handling vehicles is important for efficient operation of the automated storage and retrieval system. For example, an accurate logical representation minimises the risk of collisions of robotic container-handling vehicles with building features, and ensures correct positioning of the robotic container-handling vehicles relative to components of the automated storage and retrieval system, such as ports and chargers. The described method allows the logical representation to be verified without requiring manual verification, which is time consuming and potentially error prone. Moreover, manual verification may include safety issues, particularly if human operators traverse the grid to evaluate discrepancies between the constructed grid and the logical representation. Accordingly, the described method provides increased efficiency and accuracy, and improves safety for human operators.

The method may involve controlling the remotely operated vehicle to move to the known position relative to the storage grid. For example, the remotely operated vehicle can be directed to a specific column of the grid in order to collect data at that specific column. The method may involve controlling the remotely operated vehicle to move to all possible locations on the storage grid. Alternatively, the method for verifying the logical representation of the storage grid may be implemented by one or more computing devices of the automated storage and retrieval system, while the remotely operated vehicle is controlled by a separate computing device (e.g., by one or more processors of the remotely operated vehicle).

Data may be collected by the remotely operated vehicle traversing the grid. This means that the positions of features relative to the grid can be more easily determined, because the data is captured when the remotely operated vehicle is in a specific position relative to the grid. In one example, the remotely operated vehicle is controlled to move to the known position from a predetermined starting position relative to the grid (such as a corner of the grid or a service door of an area for servicing robotic container-handling vehicles). This means that the position at which data is captured can be determined relative to a fixed position of the grid.

Verifying the logical representation may comprise confirming that the logical representation is correct based on the comparing (i.e., if the comparison indicates that there are no discrepancies between the received data and the logical representation). Confirming the logical representation ensures efficient operation of the automated storage and retrieval system, because it provides confirmation of the operational extent of the robotic container-handling vehicles relative to the features within the physical environment. Alternatively, verifying the logical representation may comprise updating the logical representation based on the comparing (i.e., if the comparison indicates that there are one or more discrepancies between the received data and the logical representation). Updating the logical representation (in the event of one or more discrepancies) increases the efficiency of operation of the automated storage and retrieval system, because it reduces the risk of collisions and ensures correct positioning and movement of the robotic container-handling vehicles on the grid.

Updating the logical representation may include indicating that a location on the grid cannot be accessed by a container-handling vehicle. For example, the location may be obstructed by a feature of the physical environment, such as a warehouse column. Updating the logical representation in this way means that robotic container-handling vehicles can efficiently traverse the grid (by not attempting to move to locations on the grid that they cannot access). Updating the logical representation may include indicating that at least part of a column of the grid cannot be used for storage. For example, the column may be a buffer column that is used for storing containers prior to delivery to the ports. Updating the logical representation in this way means that robotic container-handling vehicles can efficiently store containers within the grid (by not attempting to store containers in columns that cannot be used for storage). Updating the logical representation may include indicating the position of a charger for providing power to the robotic container-handling vehicles (e.g., the charger 604 shown in Fig. 6). A charger may be misaligned from a planned location as a result of human error or in view of electrical wiring constraints. Updating the logical representation in this way means that robotic container-handling vehicles can be efficiently charged (by ensuring that the vehicles move to the correct charging locations).

The data associated with the position of the features within the physical environment may include an indication of features that obstruct one or more columns of the grid. Additionally or alternatively, such data may include an indication of the position of a charger (e.g., the charger 604 shown in Fig. 6) and/or a port column (e.g., the port column 126, 128 shown in Fig. 1).

Therefore, the one or more features within the physical environment may include features of the physical environment (e.g., warehouse), such as support columns and other structural features of the physical environment. For example, the one or more features within the physical environment may include an indication of features of the physical environment above the level of the grid that prevent movement of the one or more robotic container-handling vehicles. Additionally or alternatively, the one or more features within the physical environment may include features of the automated storage and retrieval system, such as chargers and ports. Further additionally or alternatively, the one or more features within the physical environment may include hardware components adjacent to the automated storage and retrieval system, such as a robot piece picker (RPP) located on top of the grid.

The at least one sensor may include a camera for capturing image data. The at least one sensor may include a proximity sensor (e.g., a LiDAR sensor) for sensing the distance between the sensor and a feature such as an obstacle. A distance to a feature within the physical environment may be determined using image processing.

The method may include automatically triggering the at least one sensor to capture the data. Providing for automatic data capture improves the safety of the data capture, because a human operator is not required to traverse the grid. This reduces the risk of injury for the human operator. Alternatively, the data may be captured by a human operator in a fixed position relative to the remotely operated vehicle (e.g., sitting on the remotely operated vehicle).

The remotely operated vehicle may be a robotic container-handling vehicle for retrieving containers from the automated storage and retrieval system. This means that an existing robotic container-handling vehicle can be used for capturing the data, thereby avoiding the need for a specific data collection vehicle. The at least one sensor maybe attached to the remotely operated vehicle via a removable sensor jig. Using a removable sensor jig means that the robotic container-handling vehicle can be returned to regular operation following capture of the data.

The method may further comprise presenting the received data and the logical representation to an operator for review. For example, the method may comprise identifying an update to the logical representation based on a result of comparing the received data to the logical representation, providing an operator with an indication of the update, and updating the logical representation responsive to receiving confirmation from the operator that the update to the logical representation should be made.

### Automated storage and retrieval system overview

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

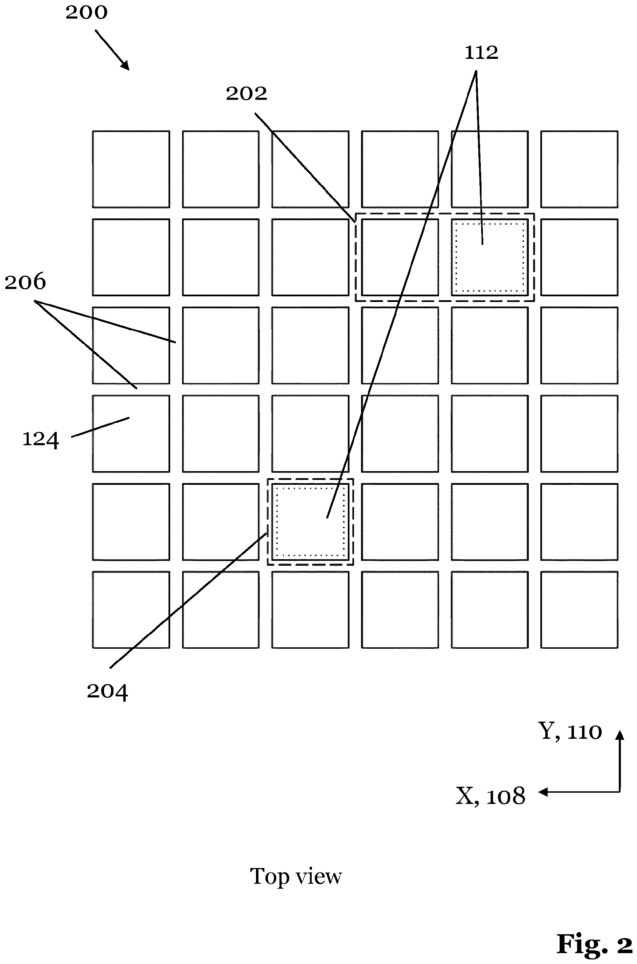

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

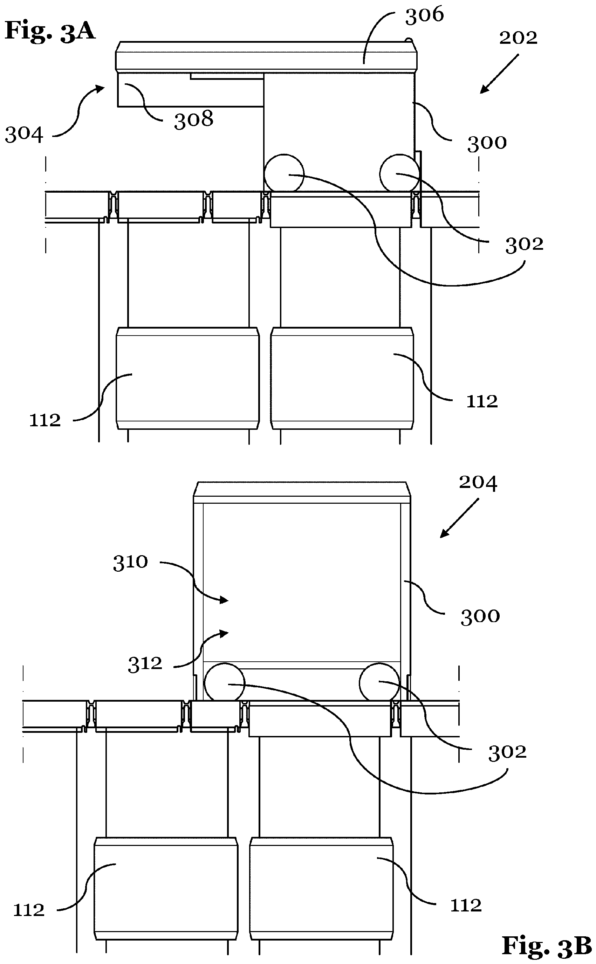

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

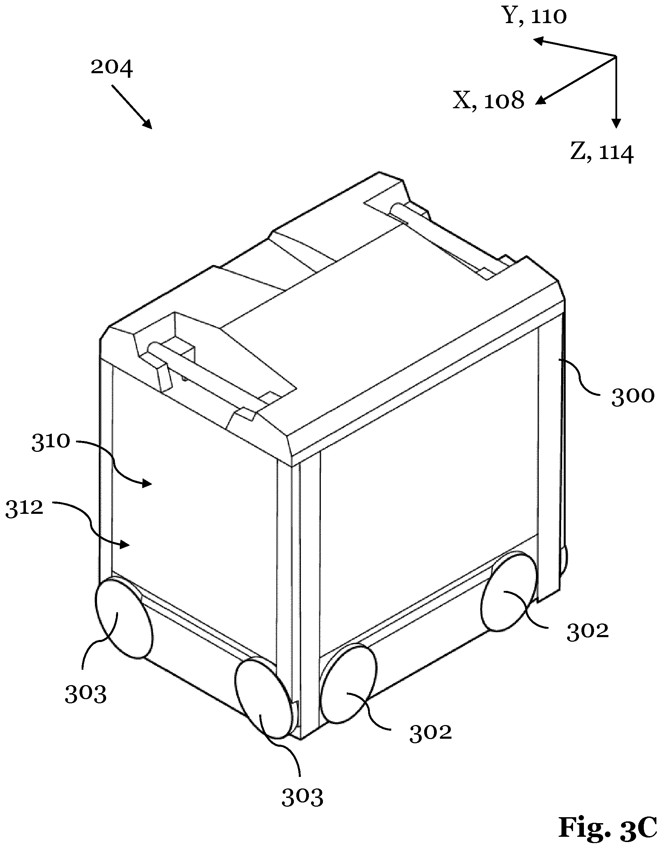

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

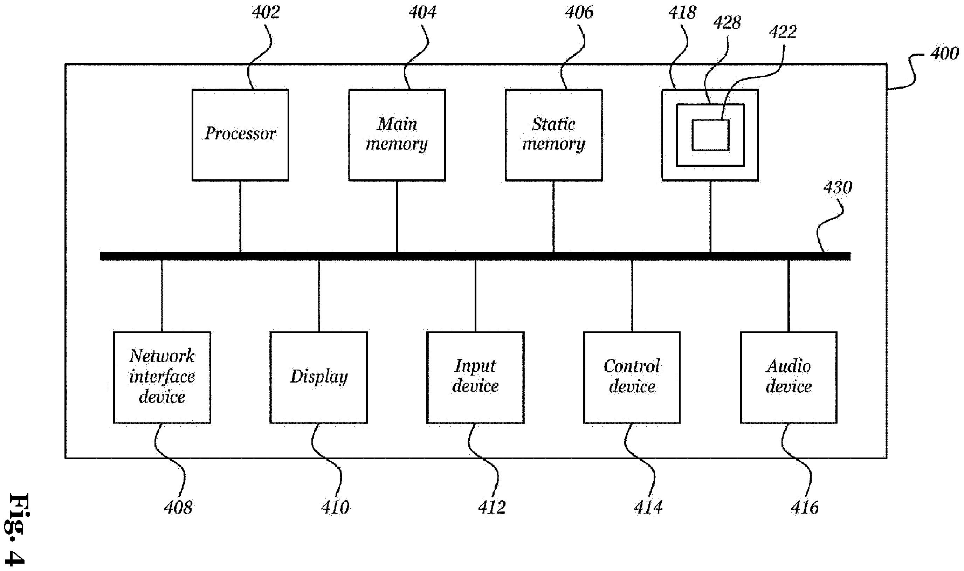

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Commissioning method and system

Fig. 5 shows a flow chart of a method 500 for verifying a logical representation of a storage grid for an automated storage and retrieval system (e.g., the grid 100 shown in Fig. 1). The method 500 may be carried out by one or more processors of one or more computing devices (e.g., the processor 402 of the processing system 400 shown in Fig. 4). The method 500 may be carried out at the time of "commissioning" the grid 100, which involves ensuring that the constructed grid 100 matches the planned layout of the grid 100 before the grid 100 is operational (i.e., prior to populating the grid 100 with bins 112).

The method 500 is described below with reference to a simplified example of a logical representation 600 of the grid 100, shown in Fig. 6. The logical representation 600 shows a location 602 on the grid 100 that cannot be accessed by a remotely operated vehicle 606 traversing the grid 100. In the example shown in Fig. 6, the location 602 includes two columns 102 of the grid 100. The logical representation 600 also shows a location of a charger 604 positioned on the grid 100. While Fig. 6 shows the remotely operated vehicle 606 for reference, it will be appreciated that the logical representation 600 does not necessarily show the location of the remotely operated vehicle 606.

Returning to Fig. 5, the method 500 optionally includes controlling the remotely operated vehicle 606 to collect data associated with one or more features within the physical environment in which the grid 100 is installed, whilst traversing the grid 100. Controlling the remotely operated vehicle 606 may include instructing, at S502, the remotely operated vehicle 606 to move from a predetermined starting position on the grid 100 to a known position on the grid 100 for collecting data. For example, some automated storage and retrieval systems are equipped with a service door, where robots 202, 204 can enter and exit the grid 100. Starting the remotely operated vehicle 606 at a service door, and collecting data with this predetermined point as the origin, can mean that the collected data is accurately and easily tied to the predetermined point on the grid 100.

The known position may be determined, for example, by determining the number of columns of the grid 100 that the remotely operated vehicle 606 traverses in the X and Y directions 108, 110. The known position that the remotely operated vehicle 606 is instructed to move to may be a specific column 102 of the grid 100. The remotely operated vehicle 606 may be instructed to move to a position in which it is directly above the specific column 102, such as a position that a robot 202, 204 would access bins 112 in the column 102.

Controlling the remotely operated vehicle 606 to collect the data may also include instructing, at S504, a sensor associated with the remotely operated vehicle 606 to capture data associated with position of a feature within the physical environment. Fig. 9 shows an example apparatus 900 for capturing the data. The apparatus 900 includes the remotely operated vehicle 606 and one or more sensors coupled to a removable sensor jig 902 attached to the remotely operated vehicle 606. The remotely operated vehicle 606 may be a robot 202, 204 to which the removable sensor jig 902 is attached, thereby allowing the robot 202, 204 to be reused for container-handling operations once the automated storage and retrieval system is operational. Alternatively, the remotely operated vehicle 606 may be a separate, special purpose remotely operated vehicle. As shown in Fig. 9, the one or more sensors may include a camera 904, a proximity sensor 906, and/or any other sensor suitable for capturing data indicative of a location of a feature within the physical environment. As an alternative to the apparatus 900 shown in Fig. 9, the remotely operated vehicle 606 may include the one or more sensors such that the removable sensor jig 902 is not required (e.g., a robot 202, 204 or other vehicle that includes the camera 904).

Instructing the sensor to capture the data at S504 may be a manual process in which a remote operator controls the sensor to capture data. Alternatively, an operator may be in a fixed position relative to the remotely operated vehicle 606 (e.g., sitting on the remotely operated vehicle 606), and may capture the data using, for example, a handheld camera. In another example, the sensor may be operated according to an automatic system in which data is captured, for example, at predetermined regular time intervals. In yet another example, the sensor may be controlled to capture data upon arrival of the remotely operated vehicle 606 at each of a series of columns 102.

As an alternative to S502 and S504, the data may be captured under control of instructions executed by one or more processors of the remotely operated vehicle 606. That is, the remotely operated vehicle 606 may autonomously traverse the grid 100 to collect the data. The collected data may then be transferred to one or more computing devices that implement the method 500.

The captured data is received at S506.

At S508, the captured data is optionally processed to determine a position of the feature relative to the grid 100. For example, the captured data may indicate the location of features in the column 102 that the remotely operated vehicle 606 captured the data from (e.g., a column 102 used as a buffer column adjacent to a port column 126, 128). Alternatively, the captured data may indicate the location of features in a column 102 immediately adjacent to the column 102 that the remotely operated vehicle 606 captured the data from (e.g., a column of the warehouse that obstructs access to a column 102 adjacent to the location of the remotely operated vehicle 606).

This data may be processed at S508 using the coordinates of the grid system. In one example, the processed data may list all cells of the grid 100 along with an indication of whether or not they are accessible for robots 202, 204 and/or storage of bins 112. Alternatively, the processed data may simply comprise a list of columns 102 that are blocked or otherwise inaccessible to robots 202, 204. The data may processed so that it is of a suitable format to allow comparison to the logical representation.

The data may be processed at S508 to determine the position of a blocked column 102 (e.g., a buffer column adjacent to a port column 126, 128). In another example, the data may be processed at S508 to determine the position of a charger 604, a port column 126, 128, or port 130, 132 (i.e., for delivery of bins 112 from the grid 100 to a location adjacent to the grid 100), or other features of the automated storage and retrieval system. In yet another example, relative locations of building columns, hanging cables or other building infrastructure which affects access to columns 102 of the grid 100 may be indicated by the processed data. As an alternative to processing the data at S508, the data may be processed by a processor of the remotely operated vehicle 606 (or a processor of any other computing device) prior to receipt of the data at S506.

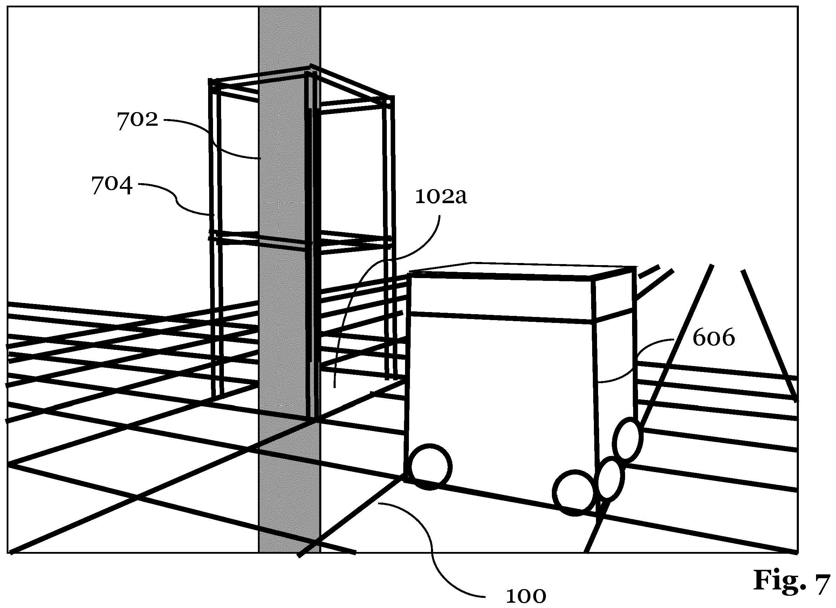

Fig. 7 shows an example in which the remotely controlled vehicle 606 traverses the grid 100 in order to verify the logical representation 600 shown in Fig. 6. As shown in Fig. 7, a specific column 102a of the grid 100 is inaccessible to the remotely controlled vehicle 606 (and therefore also inaccessible to the robots 202, 204), because a structural column 702 of the warehouse obstructs access to that column 102a. As shown in Fig. 7, a barrier 704 is constructed around the structural column 702 to prevent the robots 202, 204 from accessing the column 102a, thereby reducing the risk of collision with the structural column 702. In other examples, the presence of building features may mean that grid columns 102 are accessible to robots 202, 204, but the area underneath them cannot be used for storage. In yet another example, grid columns 102 may be accessible to some robots 202, 204, but inaccessible to others, depending on the geometry of the grid 100 and/or the orientation of the robot 202, 204. For example, a north-facing robot maybe unable to use a charger 604 for a south-facing robot 202, 204, and vice versa.

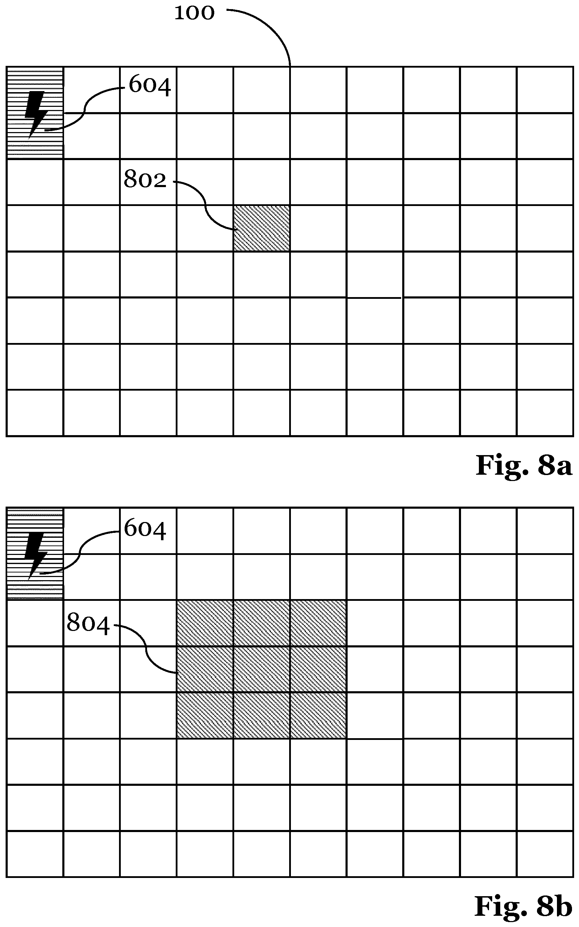

Fig. 8a shows a result of processing data captured by the remotely operated vehicle 606 shown in Fig. 7. As shown in Fig. 8a, the processed data indicates a location 802 on the grid 100 that cannot be accessed by the remotely operated vehicle 606 (i.e., the column 102a in which the structural column 702 is located). The processed data also indicates the location of the charger 604.

Returning to Fig. 5, at S510, the processed data is compared to the logical representation 600 of the grid 100. This step enables the verification of the logical representation 600 and identification of any discrepancies between the logical representation 600 and the processed data. For example, any blocked grid locations indicated by the processed data (e.g., the location 802) may be compared to the blocked locations planned and therefore included in the logical representation 600 (e.g., the blocked location 602). Similarly, the planned locations of chargers (e.g., the planned location of the charger 604) in the logical representation 600 can be compared to any charger locations that are identified as a result of processing the data (e.g., the determined location of the charger 604). This comparison may be carried out on a column by column basis with a match/no match outcome for each column 102 of the grid 100. In one example, comparing the processed data to the logical representation 600 at S510 may include outputting the processed data and the logical representation 600 to a user interface to enable a human operator to compare the processed data with the logical representation 600.

The logical representation 600 is then verified at S512-S516.

If the result of the comparison at S510 is a match, then at S512 the logical representation 600 is confirmed. Confirming the logical representation 600 results in a verified logical representation, which confirms that the logical representation 600 is accurate and can be used for controlling robots 202, 204 traversing the grid 100. The output of the comparison at S510 may be a binary match/no match indication, or it may be implied that if no discrepancy is detected, there is a match.

Confirming the logical representation 600 at S512 may include outputting the logical representation 600 and the captured and/or processed data along with an indication that the logical representation 600 is accurate. For example, such data may be output to a terminal or user interface of an operator, so that the operator can review the indication that the logical representation 600 is accurate. In some examples, the logical representation 600 maybe confirmed as accurate at S512 in response to receiving confirmation from the operator.

If there is no match at S510, this indicates a discrepancy between the collected (or processed) data and the logical representation 600. In other words, the locations of physical features within the physical environment (i.e., features of the automated storage and retrieval system, such as ports 130, 132 or chargers 604, or features of the building in which the grid 100 is installed, such as structural columns 702) are not the same as indicated in the logical representation 600. In this case, the logical representation 600 is to be updated at S516.

Returning to the example shown in Figs. 6, 7 and 8a, it can be seen that there is a discrepancy between the processed data and the logical representation 600. Specifically, in the logical representation 600, the location 602 that cannot be accessed is indicated as spanning two columns 102 of the grid 100, whereas in the processed data, the location 802 that cannot be accessed is indicated as a single column 102 of the grid 100 (i.e., the column 102a through which the structural column 702 extends). Therefore, the logical representation 600 requires updating in order to correctly identify the inaccessible location. As shown in Fig. 8a, the location of the charger 604 in the processed data is consistent with the location of the charger 604 shown in the logical representation. This means that the location of the charger 604 can be confirmed and does not require updating.

The logical representation 600 maybe updated at S516 in one of several ways. For example, the logical representation may be automatically updated based on the processed data.

Alternatively, prior to updating the logical representation 600 at S516, the captured and/or processed data and the logical representation 600 may be output to an operator for review, in order for the update to the logical representation 600 to be made at S516. As an alternative to, or in addition to, outputting the captured and/or processed data and the logical representation 600, the method 500 may include identifying an update to the logical representation 600, and sending, at S514, the identified update to the logical representation 600 to an operator (e.g., a terminal or user interface) for review. If the operator confirms that the identified update to the logical representation 600 should be made, then the method proceeds to S516.

Fig. 8b shows an example where an operator makes a different update to the logical representation 600 to the identified update sent at S514. Referring to Figs. 6 and 8a, the identified update sent at S514 may include an indication that the location 602 should be updated to a single column 102 instead of two columns 102. However, on reviewing the captured data, the operator may identify that additional protection is required around the structural column 702 in order to reduce the risk of damage to the structural column 702 in the event of a robot 202, 204 impacting the column 702. Therefore, the operator may specify a buffer zone 804 around the structural column 702, which may be protected using a barrier (either the barrier 704, or a separate barrier). In this case, the logical representation 600 is updated to include the specified buffer zone 804 (i.e., a 3×3 block of columns 102).

Accordingly, the logical representation is either updated at S516, or confirmed, at S512. Either way (whether there was initially a match at S510 or not), the logical representation 600 is verified. The verified logical representation accurately reflects the layout of the grid 100 relative to features within the physical environment. In some examples, the verified logical representation is used for controlling container-handling vehicle(s).

At S518, a robot 202, 204 may optionally be controlled according to the verified logical representation. For example, the verified logical representation may be used by a processor of the robot 202, 204 to control movement of the robot 202, 204 as it traverses the grid 100 (i.e., the robot 202, 204 will not attempt to move to an inaccessible location). Alternatively or additionally, the verified logical representation may be used by the processing system 400 in routing the robots 202, 204 to locations on the grid 100 (i.e., the processing system 400 will not route robots 202, 204 to inaccessible locations).

As explained above, Fig. 9 shows an apparatus 900 for capturing the data. The apparatus 900 may be a component of a commissioning system that further comprises a computing device configured to carry out the method 500. As explained above, the apparatus 900 of the commissioning system may alternatively include a remotely operated vehicle 606 that comprises one or more sensors (e.g., a camera 904 and/or a proximity sensor 906), and therefore does not include the removable sensor jig 902.

### Variants and alternatives

The remotely operated vehicle may be any suitable vehicle such that a sensor associated with it can collect data relating to the physical features within the physical environment in which an automated storage and retrieval system is located. For example, the remotely operated vehicle may be a dedicated robotic vehicle that moves on a rail structure or grid 100. Alternatively, the remotely operated vehicle may move on a crane structure, for example, arranged above the grid 100, or may be a flying drone that surveys the physical environment from the air, provided that the location of the vehicle relative to the grid 100 can be determined. The physical environment may be a warehouse, container or other building, but could equally be an outdoor space in which an automated storage and retrieval system is located.

The captured data may be image data, which is captured by a camera for example. Alternatively or additionally, the captured data may be a simple depth measurement, captured using a LiDAR sensor or other proximity sensor. The captured data may otherwise be any kind of information which is able to be processed to determine a relative position of the feature within the physical environment in relation to the grid 100.

As a further example to those described above, updating the logical representation 600 may include indicating that a location is inaccessible owing to the limits of the grid framework (in other words, that a robot 202, 204 cannot move off the edge of the grid 100.) Updating the logical representation 600 in this way may be necessary if there is a discrepancy in the number of columns 102 in the X and Y directions 108, 110 between the logical representation 600 and the constructed grid 100.

Updating the logical representation 600 may include indicating that at least part of a column 102 of the grid 100 cannot be used for storage. This could mean, for example, that a robot 202, 204 can move into a given grid space above the column 102, but that bins 112 cannot be lowered down or retrieved from a stack located underneath that grid space. For example, this could arise as a result of features of the building (such as cables located under the level of the grid 100), or the layout of a bridge structure connecting grids 100 (where container handling vehicles can move from one grid 100 to another). In another example, buffer columns may be arranged around a port column 126, 128. This means that storage around the area may be restricted to bins 112 that are for delivery to a port 130, 132, but cannot be used for returning bins 112 to the grid 100 for storage. In yet another example, the logical representation 600 may be updated to indicate that the area for storage under a given location on the grid 100 is a reduced depth. This could mean, for example, that only one bin 112 can be located in a stack at that grid location (rather than a plurality of bins 112 stacked on top of one another).

Where updating the logical representation 600 includes indicating the position of a charger 604 for providing power to a robot 202, 204, the logical representation 600 may be updated to reflect the type of charger 604 as well as the location of the charger 604 (i.e., where different types of charger 604 are used for charging different robots 202, 204). The type of charger could, for example, be determined using image recognition.

The data associated with one or more features within the physical environment may include the location of a port column 126, 128 for delivery of bins 112 from the grid 100 to a location adjacent to the grid 100.

The at least one sensor may include a camera 904 for capturing image data. It may capture optical image data, or infrared image data for example. Infrared image data can be particularly useful in low light conditions. The type and/or quality of image data captured may dictate the type of data processing that is used to determine the position of physical features.

The at least one sensor may include a proximity sensor for sensing the distance between the sensor and a feature such as an obstacle. The proximity sensor may be a LiDAR sensor or similar.

The remotely operated vehicle may be a robot 202, 204 for retrieving bins 112 from the automated storage and retrieval system. The robot 202, 204 may be equipped with sensors for data capture, and may be configured to move around the grid 100 on rails. The robot 202, 204 may be of the cantilever type or the cavity type described above. A sensor may be retrofitted to the robot 202, 204, or integral to it.

The at least one sensor may be attached to the remotely operated vehicle via a removable sensor jig. This means that a robot 202, 204 can be used for data collection in the method 500 described above and subsequently also used during regular operation of the automated storage and retrieval system for handling bins 112. This reduces cost and complexity as it does not require a new robot to be designed specifically for this purpose.

Robots 202, 204 may be controlled according to the verified logical representation. The robots 202, 204 may use the verified logical representation as a map to navigate the grid 100. Further processing of the verified logical representation may be required in order for the logical representation to be in a format that is usable to control a robot 202, 204. The logical representation may be used as part of a route planning process performed centrally by a controller or performed individually by a robot 202, 204.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method for verifying a logical representation of a storage grid for an automated storage and retrieval system, wherein the storage grid is installed in a physical environment, the method comprising:
receiving data associated with a position of one or more features within the physical environment, wherein the data is captured using at least one sensor associated with a remotely operated vehicle in a known position relative to the storage grid;
comparing the received data to the logical representation; and
verifying the logical representation based on a result of the comparing;
wherein the verified logical representation is for controlling movement of one or more robotic container-handling vehicles relative to the storage grid.

2. The method according to claim 1, further comprising:
instructing the remotely operated vehicle to move to the known position relative to the storage grid.

3. The method according to claim 2, wherein instructing the remotely operated vehicle to move to the known position relative to the storage grid comprises instructing the remotely operated vehicle to traverse the storage grid.

4. The method according to claim 2 or claim 3, wherein the remotely operated vehicle is instructed to move to the known position from a predetermined starting position relative to the storage grid.

5. The method according to any preceding claim, wherein verifying the logical representation comprises updating the logical representation based on the comparing.

6. The method according to claim 5, wherein updating the logical representation includes at least one of:
indicating that a grid location on the storage grid cannot be accessed by a robotic container-handling vehicle,
indicating that at least part of a column of the storage grid cannot be used for storage, and
indicating the position of a charger for providing power to a robotic container-handling vehicle of the one or more robotic container-handling vehicles.

7. The method according to any preceding claim, wherein the data associated with the position of the one or more features within the physical environment includes an indication of a position of one or more features within the physical environment that obstruct one or more columns of the storage grid.

8. The method according to any preceding claim, wherein the data associated with the position of the one or more features within the physical environment includes an indication of the position of at least one of:
a charger for providing power to a robotic container-handling vehicle of the one or more robotic container-handling vehicles; and
a port for delivery of storage containers from the storage grid to a location adjacent to the storage grid.

9. The method according to any preceding claim, wherein the at least one sensor comprises one or more of:
a camera; and
a proximity sensor.

10. The method according to any preceding claim, further comprising instructing the at least one sensor to capture the data.

11. The method according to any preceding claim, wherein the remotely operated vehicle is a robotic container-handling vehicle for retrieving containers from the automated storage and retrieval system.

12. The method according to any preceding claim, wherein the at least one sensor is attached to the remotely operated vehicle via a removable sensor jig.

13. The method according to any preceding claim, further comprising controlling the one or more robotic container-handling vehicles according to the verified logical representation.

14. A non-transitory computer readable medium storing instructions which when executed by one or more processors of a computing device, cause the computing device to carry out the method according to any preceding claim.

15. A commissioning system for verifying a logical representation of a storage grid of an automated storage and retrieval system, wherein the storage grid is installed in a physical environment, the commissioning system comprising:
a remotely operated vehicle configured to capture data associated with one or more features within the physical environment from a known position relative to the storage grid; and
a computing device configured to carry out the method according to any of claims 1-13.
